# EUROPÄISCHE PATENTSCHRIFT

(11) **EP 0 499 868 B1**
(45) Veröffentlichungstag und Bekanntmachung des Hinweises auf die Patenterteilung: **19.10.1994**
(21) Anmeldenummer: 92101766.1
(22) Anmeldetag: 04.02.1992
(51) Int. Cl.: G02B 5/26, E06B 3/66, B32B 17/10

(54) **Verglasungselement mit niedrigem Radarreflexionsgrad**
Glass sheeting element with low degree of radar reflection
Elément de vitrage ayant un faible degré de réflexion des ondes radar

(30) Priorität: 06.02.1991 DE 4103458
(43) Veröffentlichungstag der Anmeldung: 26.08.1992
(73) Patentinhaber: FLACHGLAS AKTIENGESELLSCHAFT, 90762 Fürth (DE)
(72) Erfinder: Nöthe, Axel, Dr. Dipl.-Phys., W-4620 Castrop-Rauxel (DE); Wruk, Norbert, Dr. Dipl.-Phys., W-4630 Bochum 1 (DE)

(56) Entgegenhaltungen:
- EP-A- 0 332 177
- DE-A- 2 845 764
- DE-A- 3 614 016
- US-A- 4 857 361
- US-A- 4 902 081

## Beschreibung

Die Erfindung betrifft ein im sichtbaren Spektralbereich transparentes Verglasungselement mit niedrigem Reflexionsgrad für Radarstrahlung und hohem Reflexionsgrad für IR-Strahlung.

Mit der ständig zunehmenden Zahl von Flugbewegungen und den damit verbundenen erhöhten Anforderungen an die radargestützte Flugüberwachung führen störende Reflexionen von Radarwellen an Gebäuden im Bereich von Flughafenradaranlagen zu einem wachsenden Sicherheitsproblem. Es wird immer schwieriger, Signale von Flugzeugen von durch Gebäude verursachten Störsignalen sicher zu trennen. Dabei hat sich gezeigt, daß zu den störenden Reflexen nicht nur metallische Gebäudeteile beitragen, sondern überraschenderweise auch Fassadenelemente, die eine oder mehrere Glasscheiben aufweisen.

Glas absorbiert als Dielektrikum zwar praktisch keine Radarstrahlung, weist jedoch aufgrund seines hohen Brechungsindex (n_{Glas}(Radar) ≈ 2,5) im Bereich der üblicherweise eingesetzten Radarfrequenzen von etwa 1 GHz einen erheblichen Reflexionsgrad auf. Der Radarreflexionsgrad wird weiter erhöht, wenn für die Verglasung Glasscheiben mit elektrisch hoch-leitfähigen Beschichtungen, insbesondere mit die Wärmedämmung erhöhenden IR-reflektierenden Schichten, verwendet werden. Derartige Verglasungselemente verfügen über einen Radarreflexionsgrad von nahezu 100 %.

Aus der DE-OS 39 13 421 ist es bereits bekannt, den Radarreflexionsgrad von Gebäudewänden dadurch zu reduzieren, daß an sich im Radarbereich hoch-reflektierende, nebeneinander angeordnete Einzelwandelemente, wie beispielsweise Glasplatten, tiefengestaffelt angebracht werden, wobei jeweils außenliegende und zurückversetzte Wandelemente abwechseln und der Abstand benachbarter Wandelementflächen etwa ein Viertel der Radarwellenlänge beträgt.

Diese Lösung ist unbefriedigend, da der Aufbau entsprechender Fassaden gegenüber glatten Fassaden technisch aufwendiger ist, die Reinigung erschwert wird und derartig gerasterte Fassaden ästhetisch wenig ansprechend wirken.

Für den im sichtbaren Spektralbereich nicht-transparenten Fassadenbereich ist es außerdem aus der DE-OS 39 16 416 und der DE-OS 39 18 383 bekannt, ruß- oder graphitbeschichtete Platten oder Gitter mit Dämmstoffelementen und Metallplatten zu kombinieren, um so zu einem reduzierten Radarreflexionsgrad zu gelangen. Ein solches Fassadenelement kann mangels Transparenz für Licht nicht im Fensterbereich eingesetzt werden.

Der Erfindung liegt die Aufgabe zugrunde, ein im sichtbaren Spektralbereich transparentes Verglasungselement zu schaffen, das im Fensterbereich von Gebäudewänden mit glatter Außenhaut eingesetzt werden kann und dabei einen niedrigen Radarreflexionsgrad, insbesondere im Bereich von etwa 1 GHz, aufweist. Dabei soll der Radarreflexionsgrad nach Möglichkeit deutlich weniger als 25 % (entsprechend einer Dämpfung von mindestens 6 dB), vorzugsweise weniger als 1 % (20 dB) betragen. Das Verglasungselement soll gleichzeitig einen hohen IR-Reflexionsgrad und damit eine gute Wärmedämmung aufweisen.

Die Lösung dieser Aufgabe ist Gegenstand von Anspruch 1. Vorteilhafte Weiterbildungen der Erfindung sind Gegenstand der Unteransprüche.

Der Erfindung liegt die überraschende Erkenntnis zugrunde, daß ein im sichtbaren Spektralbereich transparentes, gut wärmedämmendes Verglasungselement mit erheblich reduziertem Radarreflexionsgrad entsteht, wenn mindestens zwei Glasscheiben, die zwei definiert unterschiedlich leitfähige, lichtdurchlässige Schichten aufweisen, unter Zwischenschaltung eines Gaszwischenraums mit Abstand hintereinander angeordnet werden, wobei der Abstand der beiden unterschiedlich leitfähigen Schichten in einem von der Dicke der insgesamt eingesetzten Glasscheiben abhängigen definierten Bereich liegt. Durch die Kombination der erfindungsgemäßen Maßnahmen gelingt es mit vergleichsweise einfachen Mitteln, die von den einzelnen Glasoberflächen stammenden vier, bei Einsatz von mehr als drei Glasscheiben auch sechs oder mehr einzelnen Radarreflexionen so aufeinander abzustimmen, daß der Radarreflexionsgrad des gesamten Verglasungselements von nahezu 100 % auf 25 % oder sogar deutlich weniger (entsprechend einer Dämpfung von 6 dB oder mehr) reduziert wird. Dabei ist es von besonderem Vorteil, daß durch geeignete Anordnung zusätzlicher Glasscheiben ohne leitfähige Beschichtung die Gesamtdicke des Verglasungselements vergleichsweise gering gehalten werden kann.

Es liegt im Rahmen der Erfindung, zusätzlich zu den beiden eine elektrisch leitfähige Schicht tragenden Glasscheiben in dem Verglasungselement mindestens eine weitere Glasscheibe anzuordnen, und zwar vorzugsweise entweder zwischen den beiden genannten Glasscheiben oder zwischen der Strahlungsquelle und der die schwächer leitfähige Schicht tragenden Glasscheibe. Der geometrische Abstand der beiden leitfähig beschichteten Glasscheiben kann wegen des höheren Brechungsindex von Glas gegenüber demjenigen von Luft in beiden Fällen reduziert werden, ohne daß eine Erhöhung des Radarreflexionsgrads des Verglasungselements in Kauf genommen werden müßte. So führt beispielsweise die Anordnung einer weiteren, mittleren Glasscheibe von 10 mm Dicke zwischen den beiden eine elektrisch leitfähige Schicht tragenden Glasscheiben zu einer Senkung des für die Radarreflexionsminderung benötigten geometrischen Abstands der beiden leitfähig beschichteten Glasscheiben um etwa 15 mm (=(n_{Glas}(Radar)-n_{Luft}(Radar) · 10 mm). Wird eine weitere Glasscheibe dagegen vor der der Radarstrahlung zugewandten äußeren Glasscheibe angebracht, so kann der geometrische Abstand der beiden leitfähig beschichteten Glasscheiben sogar um n_{Glas}(Radar) · 10 mm, also etwa 25 mm vermindert werden.

Eine solche Abstandsreduzierung kann dann wünschenswert sein, wenn das Verglasungselement als geschlossenes Isolierglas ausgelegt werden soll, bei dem in üblicher Weise im Randbereich Metall- oder Kunststoffabstandhalter angeordnet und mit den Glasscheiben verbunden werden. Für diesen Fall ist es anzustreben, den geometrischen Abstand zwischen zwei benachbarten Glasscheiben nicht über etwa 24 mm hinausgehen zu lassen.

Besonders niedrige Radar-Reflexionswerte werden erreicht, wenn der radaroptische Abstand zwischen den beiden elektrisch leitfähigen Schichten im Bereich von etwa 40 mm bis 80 mm, vorzugsweise etwa 60 mm bis 70 mm, jeweils reduziert um die radaroptische Dicke n_{Glas}(Radar) · D der zwischen der Radarstrahlungsquelle und der schwächer leitfähigen Schicht befindlichen Glasscheibe oder Glasscheiben mit der Gesamtdicke D, liegt. Dabei ist zu beachten, daß bei nicht-senkrechtem Einfall der Radarstrahlung der optimale radaroptische Abstand von demjenigen bei senkrechtem Einfall geringfügig abweichen kann, und zwar liegt er üblicherweise etwas oberhalb dieses Wertes. Der für eine bestimmte vorgegebene Orientierung des Verglasungselements zur Richtung der Radarstrahlung am besten geeignete radaroptische Abstand der leitfähigen Schichten kann dabei durch einfache Versuche ermittelt werden.

Radaroptischer Abstand bezeichnet in diesem Zusammenhang das integrale Produkt nᵢ(Radar) · dᵢ aus den Radar-Brechungsindices nᵢ(Radar) der von der Radarstrahlung zwischen den elektrisch leitfähigen Schichten zu durchlaufenden Medien i und den in dem jeweiligen Medium durchlaufenen geometrischem Weg dᵢ.

Es liegt weiterhin im Rahmen der Erfindung, anstelle von monolithischen Glasscheiben Verbundglasscheiben einzusetzen, wenn dies aus statischen Gründen, Sicherheitserwägungen, zur Verbesserung der Schalldämmung usw. erforderlich oder gewünscht ist. Auch können zusätzliche nicht-leitfähige Schichten auf mindestens einer der Glasscheiben vorgesehen werden. Auf diese Weise ist es möglich, das Aussehen des Verglasungselements in Reflexion und Transmission in an sich bekannter Weise in weitem Rahmen zu modifizieren, ohne dabei jedoch die Radar-Reflexionseigenschaften zu verschlechtern.

Erfindungsgemäße Verglasungselemente werden mit besonderem Vorteil für die Verglasung des Fensterbereichs von Gebäudewänden verwendet, die innerhalb der Reichweite eines mit etwa 1 GHz arbeitenden Flughafenradars oder anderer ortsfester Radargeräte gelegen sind.

Die Erfindung wird im folgenden anhand der Zeichnung näher erläutert. Es zeigt
- **Fig. 1**: ein erstes Ausführungsbeispiel eines erfindungsgemäßen Verglasungselements, dargestellt im Querschnitt,
- **Fig. 2**: ein zweites Ausführungsbeispiel, bei dem zusätzlich zur Ausführungsform gemäß Fig. 1 eine dritte Glasscheibe zwischen der ersten und der zweiten Glasscheibe angeordnet ist,
- **Fig. 3**: ein drittes Ausführungsbeispiel mit einer weiteren Glasscheibe auf der der Radarstrahlungsquelle zugewandten Seite des Verglasungselements.

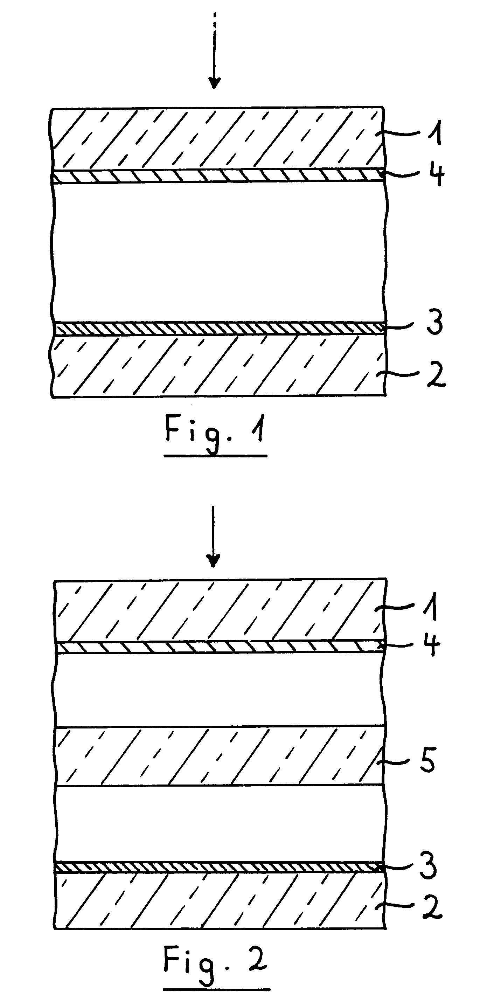

Das Verglasungselement nach **Fig. 1** besteht aus einer ersten, der durch einen Pfeil symbolisierten Radarstrahlungsquelle zugewandten Glasscheibe 1 und einer zweiten, von der ersten durch einen Gaszwischenraum getrennten, der Strahlungsquelle abgewandten Glasscheibe 2. Die zweite Glasscheibe 2 trägt auf ihrer der Strahlungsquelle zugewandten Oberfläche eine lichtdurchlässige, elektrisch hoch-leitfähige Schicht 3 mit einem Flächenwiderstand von höchstens 50 Ω, insbesondere weniger als 10 Ω.

Die Schicht 3 wird vorzugsweise von einer dünnen Silberschicht oder einer dotierten Zinnoxidschicht gebildet. Sie kann aber auch aus Gold, Indium-Zinnoxid (ITO) oder anderen hoch-leitfähigen Metallen oder Halbleitern bestehen. Zur Verbesserung der optischen Eigenschaften, der Haftung oder anderer Schichteigenschaften können zusätzliche, in der Figur nicht dargestellte Schichten aus anorganischen oder organischen Materialien vorgesehen sein.

Die elektrisch hoch-leitfähige und damit im Bereich der Radarwellen stark reflektierende Schicht 3 verleiht dem Verglasungselement den gewünschten hohen IR-Reflexionsgrad und trägt damit zur Verbesserung der thermischen Isolation des von dem im Bereich des sichtbaren Lichts transparenten Verglasungselementes verschlossenen Raumes bei.

Da ein solches Verglasungselement zwar über einen sehr niedrigen Transmissionsgrad im Bereich der Radarstrahlungsfrequenzen verfügt, wodurch störende Reflexionen aus dem Gebäudeinneren unterdrückt werden, sein Reflexionsgrad in diesem Frequenzbereich jedoch nahezu 100 % beträgt, weist das in Fig. 1 dargestellte Verglasungselement nach der Erfindung eine weitere, elektrisch schwächer leitfähige Schicht 4 mit einem Flächenwiderstand im Bereich von etwa 100 Ω bis etwa 600 Ω, insbesondere 150 Ω bis 400 Ω, auf. Diese ist auf der ersten Glasscheibe 1 angeordnet, und zwar so, daß zwischen den beiden Schichten 3, 4 ein radaroptischer Abstand von etwa 30 mm - 100 mm, reduziert um die radaroptische Dicke n_{Glas}(Radar) · D der ersten Glasscheibe 1, eingestellt wird.

Im Falle der **Fig. 1** entspricht der erfindungsgemäß einzustellende, um die radaroptische Dicke der ersten Glasscheibe 1 zu reduzierende, radaroptische Abstand praktisch dem geometrischen Abstand der beiden Glasscheiben 1, 2, da der Zwischenraum zwischen den Glasscheiben 1, 2 mit einem Gas, beispielsweise Luft, gefüllt ist, dessen Brechungsindex nahe bei 1 liegt.

Die Schicht 4 kann grundsätzlich aus einer Vielzahl von leitfähigen Materialien hergestellt werden. Bei der Materialauswahl ist allerdings darauf zu achten, daß die Einstellung des erfindungsgemäß erforderlichen Flächenwiderstands bei einer Schichtdicke möglich ist, bei der die Schicht 4 noch eine für die Verwendung des Verglasungselements im Fensterbereich ausreichende Transparenz im sichtbaren Spektralbereich zeigt. Geeignet sind insbesondere die Übergangsmetalle mit den Ordungszahlen 22 - 28, deren Legierungen und Nitride bzw. Silizide, die Edelmetalle Platin, Palladium und Rhodium sowie halbleitende Metalloxide wie ITO und dotiertes Zinnoxid.

Das Verglasungselement gemäß **Fig. 2** stellt eine besonders bevorzugte Ausführungsform der Erfindung dar. Es besteht wie bei demjenigen aus der **Fig. 1** aus einer ersten Glasscheibe 1 mit einer schwächer leitfähigen Schicht 4 und einer zweiten Glasscheibe 2 mit einer hoch-leitfähigen Schicht 3. Zusätzlich hierzu ist zwischen den beiden Glasscheiben 1, 2 eine weitere, mittlere Glasscheibe 5 angeordnet. Durch diese Maßnahme wird erreicht, daß der geometrische Abstand der Glasscheiben 1, 2 zur Erreichung eines vergleichbar niedrigen Radarreflexionsgrades wie bei dem Verglasungselement nach **Fig. 1** vermindert werden kann, und zwar etwa um den Betrag von (n_{Glas}(Radar) - 1) · d₅, wobei d₅ die Dicke der mittleren Glasscheibe 5 und n_{Glas}(Radar) der Brechungsindex von Glas für Radarstrahlung ist. Der Gaszwischenraum zwischen den Glasscheiben 1, 2 wird darüber hinaus durch die mittlere Glasscheibe 5 in kleinere Teilzwischenräume unterteilt, wodurch es in wünschenswerter Weise möglich wird, das Verglasungselement als gasdichtes Isolierglas auszuführen, bei dem im Randbereich zwischen den Glasscheiben 1 und 5 sowie zwischen den Glasscheiben 2 und 5 je ein (hier nicht dargestellter) Abstandhalterrahmen angeordnet und mit diesen verbunden wird.

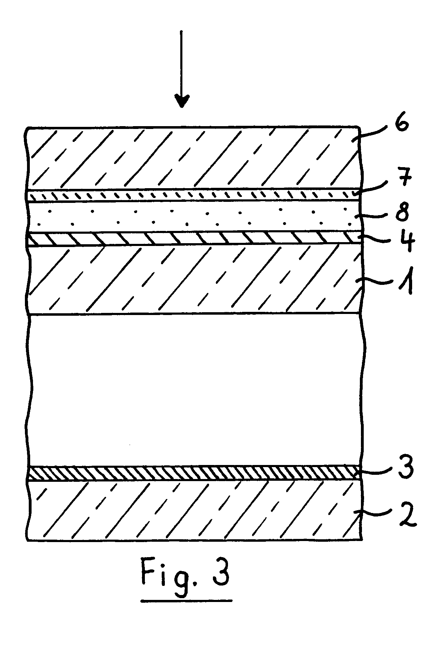

**Fig. 3** schließlich zeigt eine weitere Ausführungsform der Erfindung, bei der sich im Unterschied zu den vorhergehenden Beispielen die schwächer leitfähige Beschichtung 4 der Glasscheibe 1 auf deren der Radarstrahlung zugewandter Oberfläche befindet und zwischen dieser und der Radarstrahlungsquelle eine weitere, äußere Glasscheibe 6 angeordnet ist. Bei dieser Ausführungsform kann zum Erreichen einer in etwa gleichwertigen Radar-Reflexionsminderung der geometrische Abstand der Glasscheiben 1 und 2 gegenüber demjenigen des Verglasungselements nach **Fig. 1** um (D + d₁) · n_{Glas}(Radar) reduziert werden, wobei d₁ der Dicke der Glasscheibe 1 und D der Dicke der äußeren Glasscheibe 6 entsprechen und n_{Glas}(Radar) der Radar-Brechungsindex von Glas ist. Im Falle der Verwendung von zwei beispielsweise 8 mm dicken Glasscheiben 1, 6 bei dem Verglasungselement nach **Fig. 3** reduziert sich der optimale geometrische Abstand der Glasscheiben 1, 6 also um etwa 40 mm. Damit kann das gesamte Verglasungselement ohne weiteres als geschlossenes Isolierglas ausgeführt werden.

Die äußere Glasscheibe 6 dient unter anderem zum Schutz der elektrisch leitfähigen Schicht 4 vor Beschädigung. Die Zwischenlage 8 zwischen den Glasscheiben 1 und 6 ist entweder wie beschrieben ein Gaszwischenraum, sie kann aber auch durch eine etwa 1 mm dicke, optisch transparente Kunststoffverbundschicht, z.B. aus Polyvinylbutyral, Polyurethan, Polyvinylchlorid oder aus Gießharzen, insbesondere auf Acrylatbasis, gebildet sein.

Im ersten Fall wird die Teileinheit aus den Glasscheiben 1 und 6 vorzugsweise als gasdichtes Isolierglas ausgeführt. Im zweiten Fall kann die Verbundschicht dem Verglasungselement Sicherheitseigenschaften verleihen oder aber dessen Schalldämmung verbessern. Sie kann aber auch, wenn auf eine separate schwächer leitfähige Schicht 4 verzichtet werden soll, mit die Transparenz im sichtbaren Spektralbereich nicht beeinträchtigenden leitfähigen Zusätzen versehen werden und dadurch die Funktion der Schicht 4 selbst übernehmen.

Im Falle der **Fig. 3** trägt die äußere Glasscheibe 6 auf ihrer der Strahlungsquelle abgewandten Oberfläche eine nicht-leitfähige optisch transparente Schicht 7, z.B. aus TiO₂, SiO₂ oder anderen dielektrischen Materialien, mit der die optischen Eigenschaften des Verglasungselements modifiziert werden, insbesondere zur Anpassung der Reflexions- oder Transmissionsfarbe des Verglasungselements an benachbarte Wandelemente, wie z.B. lichtundurchlässige Fassadenplatten.

Neben anorganischen Glasscheiben, die in der Regel aus klarem oder schwach eingefärbtem Floatglas bestehen, können grundsätzlich auch Scheiben aus organischen Gläsern verwendet werden, z.B. aus Polykarbonat, PMMA oder dergleichen. Die hoch-leitfähige Schicht 3 wird ebenso wie die schwächer leitfähige Schicht 4 bevorzugt auf einer zur Innenseite des Verglasungselements weisenden Glasoberfläche angebracht, insbesondere dann, wenn die Schicht mechanisch oder chemisch anfällig ist. Es liegt jedoch durchaus im Erfindungsrahmen, die Schichten 3 oder 4 auf freiliegenden Glasoberflächen anzuordnen, wenn die Schichten ausreichend widerstandsfähig ausgelegt ist. Der Vorteil einer solchen Anordnung liegt darin, daß der notwendige geometrische Abstand der Glasscheiben in diesem Falle reduziert wird, wie oben erläutert wurde.

### Beispiel 1

Ein erstes Verglasungselement, das innerhalb der Reichweite des Flughafenradars im Fensterbereich einer praktisch rechtwinklig zur Richtung des Flughafenradars orientierten Gebäudewand eingebaut werden sollte, hatte den folgenden Aufbau:

Entsprechend Fig. 1 bestand das Verglasungselement aus einer ersten Floatglasscheibe 1 mit einer Dicke von 10 mm, die auf ihrer der Radarstrahlungsquelle abgewandten Oberfläche mit einer mittels Kathodenzerstäubung aufgebrachten Platinschicht 4 mit einem Flächenwiderstand von 300 Ω versehen war.

Mit Abstand von der ersten Glasscheibe 1 war auf deren der Radarstrahlungsquelle abgewandten Seite eine 4 mm dicke Floatglasscheibe 2 angeordnet, die auf ihrer dem 30 mm breiten Gaszwischenraum zugewandten Oberfläche eine elektrisch hochleitfähige Beschichtung 3 aus Indium-Zinnoxid (ITO) aufwies. Die Beschichtung 3 hatte einen Flächenwiderstand von etwa 15 Ω.

Das Verglasungselement war hoch-wärmedämmend und wegen seiner guten Transparenz im Fensterbereich verwendbar. Seine Gesamtdicke betrug 44 mm.

Der radaroptische Abstand der beiden leitfähigen Schichten 3, 4 betrug 30 mm und entsprach damit dem geometrischen Abstand der beiden Glasscheiben 1, 2. Sie lag mitten im beanspruchten Intervall von 5 - 75 mm (= 30 - 100 mm vermindert um die radaroptische Dicke von 25 mm der ersten Glasscheibe 1). Der Radarreflexionsgrad bei annähernd senkrechtem Einfall betrug weniger als 1 % (mehr als 20 dB).

### Beispiel 2

Ein anderes Verglasungselement, das in der Nähe eines Flughafens im Fensterbereich einer zum Flughafenradar weisenden Gebäudewand eingebaut werden sollte, hatte den folgenden Aufbau:

Entsprechend Fig. 2 bestand das Verglasungselement aus einer ersten Floatglasscheibe 1 mit einer Dicke von 8 mm, die auf ihrer der Radarstrahlungsquelle abgewandten Oberfläche mit einer mittels Kathodenzerstäubung aufgebrachten Schicht 4 aus einer Chrom-Nickel-Legierung mit einem Flächenwiderstand von 360 Ω versehen war.

Mit Abstand von der ersten Glasscheibe 1 war auf deren der Radarstrahlungsquelle abgewandten Seite eine 4 mm dicke Floatglasscheibe 2 angeordnet, die auf ihrer der ersten Glasscheibe 1 zugewandten Oberfläche eine elektrisch hochleitfähige Beschichtung 3 aus Indium-Zinnoxid (ITO) aufwies. Die Beschichtung 3 hatte einen Flächenwiderstand von etwa 15 Ω. Zwischen den beiden leitfähig beschichteten Glasscheiben 1, 2 war eine weitere, unbeschichtete Floatglasscheibe 5 der Dicke 10 mm angeordnet, und zwar so, daß ihr Abstand von der ersten Glasscheibe 1 4 mm und der Abstand von der zweiten Glasscheibe 2 11 mm betrug. Die drei Glasscheiben 1, 2, 5 waren jeweils unter Zwischenschaltung eines umlaufenden Abstandhalterrahmens gasdicht miteinander verbunden.

Das Verglasungselement verfügte über einen k-Wert von weniger als 1,5 W/m² sowie einen Lichttransmissionsgrad von mehr als 15 %. Seine Gesamtdicke betrug 37 mm. Aufgrund der unterschiedlichen Dicken der verwendeten Glasscheiben 1, 2, 5 war auch die Schalldämmung des Verglasungselements gut.

Der radaroptische Abstand der beiden leitfähigen Schichten 3, 4 betrug 40 mm (Summe der geometrischen Scheibenabstände 4 mm und 11 mm + radaroptische Dicke 25 mm der mittleren Glasscheibe 5). Sie lag mitten im beanspruchten Intervall von 10 - 80 mm (= 30 - 100 mm vermindert um die radaroptische Dicke von 20 mm der ersten Glasscheibe 1). Der Radarreflexionsgrad bei annähernd senkrechtem Einfall betrug weniger als 1 % (mehr als 20 dB). Für den Einbau in eine Gebäudewand, deren Lot 50° von der Richtung des Flughafenradars abwich, wurde das Verglasungselement geringfügig abgeändert, indem der Abstand der beiden Glasscheiben 2, 5 um 1 mm auf 12 mm erhöht und eine etwas dünnere und damit schwächer leitfähige Chrom-Nickel-Schicht 4 (Flächenwiderstand knapp 500 Ω) verwendet wurde. Der Radarreflexionsgrad dieses Verglasungselements lag trotz der ungünstigeren Bedingungen (schräger Strahlungseinfall) noch deutlich unter 10 % (Dämpfung mehr als 10 dB).

### Beispiel 3

Ein Verglasungselement, das in unmittelbarer Nähe eines Flughafens im Fensterbereich einer nahezu rechtwinklig zur Richtung des Flughafenradars orientierten Gebäudewand eingebaut werden sollte, hatte den folgenden Aufbau:

Entsprechend Fig. 3 bestand das Verglasungselement aus einer ersten Floatglasscheibe 1 mit einer Dicke von 4 mm, die auf ihrer der Radarstrahlungsquelle zugewandten Oberfläche mit einer mittels Kathodenzerstäubung aufgebrachten Platinschicht 4 mit einem Flächenwiderstand von 200 Ω versehen war. An die Platinschicht 4 schloß sich unter Zwischenschaltung einer 0,76 mm dicken Verbundfolie 8 aus Polyvinylbutyral eine äußere Floatglasscheibe 6 mit einer Dicke von 8 mm an, die aus Sicherheitsgründen thermisch vorgespannt war. Auf ihrer der Verbundfolie 8 zugewandten Oberfläche trug die äußere Glasscheibe 6 eine dünne dielektrische TiO₂-Schicht 7 zur Einstellung der Reflexionseigenschaften des Verglasungselements im sichtbaren Spektralbereich.

Die aus den Glasscheiben 1, 6 und der Verbundfolie 8 gebildete Verbundglasscheibe war über einen umlaufenden Abstandhalterrahmen gasdicht mit einer 4 mm dicken Floatglasscheibe 2 verbunden, die auf ihrer dem 12 mm breiten Gaszwischenraum zugewandten Oberfläche eine elektrisch hoch-leitfähige Beschichtung 3 aufwies. Die Beschichtung 3 bestand entsprechend DE-PS 33 16 548 aus einer in dielektrische Entspiegelungsschichten sowie weitere Hilfsschichten eingebetteten, wenige Nanometer dicken Silberschicht und hatte einen Flächenwiderstand von 8 Ω.

Das Verglasungselement verfügte über einen k-Wert von weniger als 1,5 W/m² sowie einen Lichttransmissionsgrad von mehr als 30 %. Seine Gesamtdicke betrug nur knapp 29 mm.

Der radaroptische Abstand der beiden leitfähigen Schichten 3, 4 betrug 22 mm (Gaszwischenraum + radaroptische Dicke der Glasscheibe 1) und lag damit im beanspruchten Intervall von 10 - 80 mm (= 30 - 100 mm vermindert um die radaroptische Dicke von 20 mm der äußeren Glasscheibe 6). Der Radarreflexionsgrad bei annähernd senkrechtem Einfall betrug weniger als 25 %. Durch eine Vergrößerung des Abstandes der beiden Glasscheiben 1, 6 und damit der beiden leitfähigen Schichten 3, 4 konnte der Radarreflexionsgrad unter Inkaufnahme einer Erhöhung der Gesamtdicke des Verglasungselements weiter auf deutlich weniger als 10 % reduziert werden.

### Beispiel 4

Ein weiteres Verglasungselement, das in unmittelbarer Nähe eines Flughafens im Fensterbereich einer einen Winkel von etwa 45° zur Richtung des Flughafenradars einschließenden Gebäudewand eingebaut werden sollte, hatte den folgenden Aufbau:

Entsprechend Fig. 3 bestand das Verglasungselement aus einer ersten Floatglasscheibe 1 mit einer Dicke von 6 mm, die auf ihrer der Radarstrahlungsquelle zugewandten Oberfläche mit einer mittels Kathodenzerstäubung aufgebrachten Schicht 4 aus einer Chrom-Nickel-Legierung mit einem Flächenwiderstand von 400 Ω versehen war. An die mit der metallischen Schicht 4 versehene Glasscheibe 1 schloß sich unter Zwischenschaltung eines 4 mm breiten umlaufenden Abstandhalterrahmens zur Bildung eines entsprechend breiten Gaszwischenraums 8 eine äußere Floatglasscheibe 6 mit einer Dicke von 10 mm an, die aus Sicherheitsgründen thermisch vorgespannt war. Auf ihrer dem Gaszwischenraum 8 zugewandten Oberfläche trug die äußere Glasscheibe 6 eine dünne dielektrische TiO₂-Schicht 7 zur Einstellung der Reflexionseigenschaften des Verglasungselements im sichtbaren Spektralbereich.

Die aus den Glasscheiben 1 und 6 gebildete Isolierglasscheibe war über einen weiteren umlaufenden Abstandhalterrahmen gasdicht mit einer 4 mm dicken Floatglasscheibe 2 verbunden, die auf ihrer dem so gebildeten 18 mm breiten Gaszwischenraum zugewandten Oberfläche eine elektrisch hoch-leitfähige Beschichtung 3 entsprechend Beispiel 1 aufwies.

Die 4 mm dicke Floatglasscheibe 2 war auf ihrer der Beschichtung 3 abgewandten Seite über eine in Fig. 3 nicht dargestellte schalldämmende Gießharzschicht auf Acrylatbasis einer Dicke von 1 mm mit einer ebenfalls nicht gezeigten weiteren Floatglasscheibe gleicher Dicke verbunden.

Das Verglasungselement verfügte über einen k-Wert von weniger als 1,5 W/m², einen Lichttransmissionsgrad von etwa 30 %. sowie einen Energietransmissionsgrad von etwa 26 %. Seine Gesamtdicke betrug 43 mm. Es zeigte darüber hinaus mit einem R_{w}-Wert von mehr als 45 dB hervorragende Schalldämmeigenschaften.

Der radaroptische Abstand der beiden leitfähigen Schichten 3, 4 betrug 33 mm (Gaszwischenraum von 18 mm + radaroptische Dicke der Glasscheibe 1) und lag damit im beanspruchten Intervall von 5 - 75 mm (= 30 - 100 mm vermindert um die radaroptische Dicke von 25 mm der äußeren Glasscheibe 6). Der Radarreflexionsgrad bei einer Einfallsrichtung von 45° betrug weniger als 1 %.

### Bezugszeichenliste

1: Erste Glasscheibe
2: Zweite Glasscheibe
3: Hoch-leitfähige dünne Schicht
4: Schwächer leitfähige Schicht
5: Mittlere Glasscheibe
6: Äußere Glasscheibe
7: Nicht-leitfähige Schicht
8: Zwischenlage (Kunststoffverbundschicht oder Gaszwischenraum)

## Patentansprüche

1. Im sichtbaren Spektralbereich transparentes Verglasungselement mit niedrigem Reflexionsgrad für Radarstrahlung einer Frequenz von etwa 1 GHz und hohem Reflexionsgrad für IR-Strahlung,
mit einer ersten, im Gebrauch der Strahlungsquelle zugewandten Glasscheibe (1) mit einer Dicke zwischen 4 mm und 15 mm,
mit einer zweiten, der Strahlungsquelle abgewandten Glasscheibe (2),
wobei die zweite Glasscheibe (2) eine lichtdurchlässige, elektrisch hoch-leitfähige dünne Schicht (3) mit einem Flächenwiderstand von höchstens 50 Ω trägt,
wobei die erste Glasscheibe (1) eine lichtdurchlässige, elektrisch schwächer leitfähige Schicht (4) mit einem Flächenwiderstand zwischen 100 Ω und 600 Ω trägt,
und wobei die beiden elektrisch leitfähigen Schichten (3, 4) in einem radaroptischen Abstand von mindestens etwa 30 mm - n_{Glas}(Radar) · D und höchstens etwa 100 mm - n_{Glas}(Radar) · D, mit D = Gesamtdicke aller zwischen der Schicht (4) und der Strahlungsquelle befindlichen Glasscheiben (1, 6), angeordnet sind, wobei unter dem radaroptischen Abstand das integrale Produkt aus den Radar-Brechungsindizes der von der Radarstrahlung zwischen den leitfähigen Schichten zu durchlaufenden Medien und den in dem jeweiligen Medium durchlaufenen Weg zu verstehen ist.

2. Verglasungselement nach Anspruch 1, dadurch gekennzeichnet, daß die elektrisch schwächer leitfähige Schicht (4) der ersten Glasscheibe (1) einen Flächenwiderstand zwischen 150 Ω und 500 Ω aufweist.

3. Verglasungselement nach einem der vorangehenden Ansprüche, dadurch gekennzeichnet, daß die elektrisch hochleitfähige Schicht (3) der zweiten Glasscheibe (2) einen Flächenwiderstand von höchstens 20 Ω aufweist.

4. Verglasungselement nach Anspruch 3, dadurch gekennzeichnet, daß die elektrisch hoch-leitfähige Schicht (3) der zweiten Glasscheibe (2) einen Flächenwiderstand von höchstens 10 Ω aufweist.

5. Verglasungselement nach einem der vorangehenden Ansprüche, dadurch gekennzeichnet, daß die beiden elektrisch leitfähigen Schichten (3, 4) in einem radaroptischen Abstand von mindestens etwa 40 mm - n_{Glas}(Radar) · D und höchstens etwa 80 mm - n_{Glas}(Radar) · D, vorzugsweise etwa 70 mm - n_{Glas}(Radar) · D, angeordnet sind.

6. Verglasungselement nach einem der vorangehenden Ansprüche, dadurch gekennzeichnet, daß das Material der elektrisch hoch-leitfähigen Schicht (3) der zweiten Glasscheibe (2) ausgewählt ist aus Ag, Au, Indium-Zinnoxid (ITO), F-dotiertem SnO₂ und Sb-dotiertem SnO₂.

7. Verglasungselement nach einem der vorangehenden Ansprüche, dadurch gekennzeichnet, daß das Material der elektrisch schwächer leitfähigen Schicht (4) der ersten Glasscheibe (1) ausgewählt ist aus
a) den Übergangsmetallen mit den Ordnungszahlen 22 - 28 des Periodischen Systems der Elemente und Legierungen dieser Metalle, insbesondere Cr, Ni, NiCr-Legierungen, Edelstahl,
b) leitfähigen Nitriden oder Siliziden der genannten Metalle
c) den Edelmetallen Rh, Pd und Pt, sowie
d) halbleitenden Metalloxiden wie Indium-Zinn-Oxid (ITO) oder dotiertem SnO₂.

8. Verglasungselement nach einem der vorangehenden Ansprüche, dadurch gekennzeichnet, daß mindestens eine der Glasscheiben (1, 2) über eine Kunststoffverbundschicht (8) mit einer weiteren Glasscheibe (6), eine Verbundglasscheibe bildend, verbunden ist.

9. Verglasungselement nach Anspruch 8, dadurch gekennzeichnet, daß die erste Glasscheibe (1) über eine Kunststoffverbundschicht (8) mit einer weiteren Glasscheibe (6), eine Verbundglasscheibe bildend, verbunden ist.

10. Verglasungselement nach einem der Ansprüche 1 bis 8, dadurch gekennzeichnet, daß zwischen der Strahlungsquelle und der ersten Glasscheibe (1) eine weitere Glasscheibe (6), mit der ersten Glasscheibe (1) eine Isolierglasscheibe bildend, angeordnet ist.

11. Verglasungselement nach Anspruch 9 oder 10, dadurch gekennzeichnet, daß die elektrisch schwächer leitfähige Schicht (4) der ersten Glasscheibe (1) auf der der weiteren Glasscheibe (6) zugewandten Oberfläche angeordnet ist.

12. Verglasungselement nach Anspruch 9, dadurch gekennzeichnet, daß die elektrisch schwächer leitfähige Schicht auf der ersten Glasscheibe (1) durch die Kunststoffverbundschicht (8) gebildet ist, über die die erste Glasscheibe (1) mit einer weiteren Glasscheibe (6) verbunden ist.

13. Verglasungselement nach einem der vorangehenden Ansprüche, dadurch gekennzeichnet, daß zwischen den beiden mit den elektrisch leitfähigen Schichten (3, 4) versehenen Glasscheiben (1, 2) mindestens eine weitere Glasscheibe (5) mit einer Dicke von 4 mm bis 15 mm angeordnet ist.

14. Verglasungselement nach Anspruch 13, dadurch gekennzeichnet, daß eine der beiden leitfähig beschichteten Glasscheiben (1, 2) über eine Kunststoffverbundschicht (8) mit der weiteren Glasscheibe (5), eine Verbundglasscheibe bildend, verbunden ist.

15. Verglasungselement nach einem der vorangehenden Ansprüche, dadurch gekennzeichnet, daß mindestens eine der Glasscheiben (1, 2, 5, 6) mit mindestens einer zusätzlichen, elektrisch nicht-leitfähigen Schicht (7) versehen ist, die eine Änderung der optischen Eigenschaften (Transmission, Reflexion, Absorption) des Verglasungselements im sichtbaren Spektralbereich und/oder im IR-Bereich bewirkt.

16. Verglasungselement nach einem der vorangehenden Ansprüche, dadurch gekennzeichnet, daß mindestens zwei der Glasscheiben (1, 2, 5, 6) im Randbereich gasdicht miteinander verbunden sind.

17. Verglasungselement nach Anspruch 16, dadurch gekennzeichnet, daß alle Glasscheiben (1, 2, 5, 6) im Randbereich gasdicht miteinander verbunden sind.

18. Verwendung des Verglasungselements nach einem der vorangehenden Ansprüche zum Einbau im Fensterbereich von Gebäudewänden, die innerhalb der Reichweite eines ortsfesten Flughafenradargerätes oder dergleichen liegen.

## Claims

1. Glazing element transparent in the visible region of the spectrum with a low reflection factor for radar radiation with a frequency of approximately 1 GHz and a high reflection factor for IR radiation, with a first glass pane (1), when in use, facing towards the radiation source, with a thickness of between 4 mm and 15 mm, with a second glass pane (2) facing away from the radiation source, where the second glass pane (2) bears a thin, light-transmitting, highly electrically conductive layer (3) with a maximum surface resistance of 50 Ω, where the first glass pane (1) bears a light-transmitting, more weakly electrically conductive layer (4) with a surface resistance of between 100 Ω and 600 Ω, and where the two electrically conductive layers (3, 4) are arranged at a minimum radar-optical distance of approximately 30 mm - n_{glass}(radar) * D and a maximum distance of 100 mm - n_{glass}(radar) * D, where D = the overall thickness of all the glass panes (1, 6) located between the layer (4) and the radiation source, where by the radar-optical distance is meant the integral product of the radar refractive indices of the media between the conductive layers to be traversed by the radar radiation and the distance traversed in the medium in question.

2. Glazing element in accordance with Claim 1, characterized by the fact that the more weakly electrically conductive layer (4) of the glass pane (1) possesses a surface resistance of between 150 Ω and 500 Ω.

3. Glazing element in accordance with one of the foregoing Claims, characterized by the fact that the highly electrically conductive layer (3) of the second glass pane (2) possesses a maximum surface resistance of 20 Ω.

4. Glazing element in accordance with Claim 3, characterized by the fact that the highly electrically conductive layer (3) of the second glass pane (2) possesses a maximum surface resistance of 10 Ω.

5. Glazing element in accordance with one of the foregoing Claims, characterized by the fact that the two electrically conductive layers (3, 4) are arranged at a radar-optical distance of minimum approximately 40 mm - n_{glass}(radar) * D and maximum approximately 80 mm - n_{glass}(radar) * D, preferably approximately 70 mm - n_{glass}(radar) * D.

6. Glazing element in accordance with one of the foregoing Claims, characterized by the fact that the material of the highly electrically conductive layer (3) of the second is selected of Ag, Au, indium tin oxide (ITO), F-doped SnO₂ and Sb-doped SnO₂.

7. Glazing element in accordance with one of the foregoing Claims, characterized by the fact that the material of the more weakly electrically conductive layer (4) of the first glass pane is selected from:
a) the transition metals with the atomic numbers 22 - 28 of the periodic system of elements and alloys of these metals, in particular Cr, Ni, NiCr alloys, stainless steel,
b) conductive nitrides or silicides of the said metals,
c) the noble metals Rh, Pd and Pt, as well as
d) semi-conductive metal oxides, such as indium tin oxide (ITO) or doped SnO₂.

8. Glazing element in accordance with one of the foregoing Claims, characterized by the fact that at least one of the glass panes (1, 2) is bonded by means of a plastic laminating layer (8) to a further glass pane (6), forming a laminated glass pane.

9. Glazing element in accordance with Claim 8, characterized by the fact that the first glass pane (1) is bonded by means of a plastic laminating layer (8) to a further glass pane (6), forming a laminated glass pane.

10. Glazing element in accordance with one of Claims 1 to 8, characterized by the fact that between the radiation source and the first glass pane (1) is arranged a further glass pane (6), forming a double glazing pane with the first glass pane (1).

11. Glazing element in accordance with Claim 9, characterized by the fact that the more weakly electrically conductive layer (4) of the first glass pane (1) is arranged on the surface facing towards the further glass pane (6).

12. Glazing element in accordance with Claim 9, characterized by the fact that the more weakly electrically conductive layer on the first glass pane (1) is formed by the plastic laminating layer (8), by means of which the first glass pane (1) is bonded to a further glass pane (6).

13. Glazing element in accordance with one of the foregoing Claims, characterized by the fact that between the two glass panes (1, 2) provided with the electrically conductive layers (3, 4) is arranged at least one further glass pane (5) with a thickness of 4 mm to 15 mm.

14. Glazing element in accordance with Claim 13, characterized by the fact that one of the two conductively coated glass panes (1, 2) is bonded by means of a plastic laminating layer (8) to the further glass pane (5), forming a laminated glass pane.

15. Glazing element in accordance with one of the foregoing Claims, characterized by the fact that at least one of the glass panes (1, 2, 5, 6) is provided with at least one additional, electrically non-conductive layer (7) which leads to a change in the optical properties (transmission, reflection, absorption) of the glazing element in the visible region of the spectrum and/or in the IR region.

16. Glazing element in accordance with one of the foregoing Claims, characterized by the fact that at least two of the glass panes (1, 2, 5, 6) are bonded to one another in the edge region so as to be gastight.

17. Glazing element in accordance with Claim 16, characterized by the fact that all the glass panes (1, 2, 5, 6) are bonded to one another in the edge region so as to be gastight.

18. Use of the glazing element in accordance with one of the foregoing Claims for installation in the window region of building walls which are within range of a fixed airport radar or the like.

## Revendications

1. Elément vitré transparent dans la partie visible du spectre, à faible degré de réflexion des faisceaux-radar à une fréquence d'environ 1 GHz et à haut degré de réflexion du rayonnement infrarouge,
comportant une première plaque vitrée (1) tournée pendant le service vers la source de rayonnement et d'une épaisseur comprise entre 4 et 15 mm,
comportant une seconde plaque vitrée (2) opposée à la source de rayonnement,
la seconde plaque de verre (2) présentant une couche mince (3) translucide hautement électroconductrice et d'une résistance superficielle de 50 ohms maximum,
la première plaque de verre (1) présentant une couche (4) translucide plus faiblement électroconductrice d'une résistance superficielle comprise entre 100 et 600 ohms,
les deux couches électroconductrices (3, 4) étant disposées à une distance optique radar d'environ au moins 30 mm - nᵥₑᵣᵣₑ(radar) * D et d'environ au plus 100 mm - nᵥₑᵣᵣₑ (radar) * D, D représentant l'épaisseur totale de toutes les plaques (1, 6) se trouvant entre la couche (4) et la source de rayonnement, sachant qu'il faut entendre par distance optique radar le produit intégral de l'indice de réfraction radar des substances que le faisceau radar doit traverser entre les couches conductrices et le chemin parcouru dans la substance respectif.

2. Elément vitré selon la revendication 1, caractérisé en ce que la couche plus faiblement électroconductrice (4) de la première plaque vitrée (1) présente une résistance superficielle comprise entre 150 et 500 ohms.

3. Elément vitré selon l'une des revendications précédentes, caractérisé en ce que la couche hautement électroconductrice (3) de la seconde plaque vitrée (2) présente une résistance superficielle de 20 ohms maximum.

4. Elément vitré selon la revendication 3, caractérisé en ce que la couche hautement électroconductrice (3) de la seconde plaque vitrée (2) présente une résistance superficielle de 10 ohms maximum.

5. Elément vitré selon l'une des revendications précédentes, caractérisé en ce que les deux couches (3, 4) électroconductrices sont disposées à une distance optique radar d'environ au moins 40 mm - nᵥₑᵣᵣₑ(radar) * D et d'environ au plus 80 mm - nᵥₑᵣᵣₑ(radar) * D, de préférence d'environ 70 mm - nᵥₑᵣᵣₑ (radar) * D.

6. Elément vitré selon l'une des revendications précédentes, caractérisé en ce que la matériau de la couche (3) hautement électroconductrice de la plaque vitrée (2) est sélectionné en Ag, Au, oxyde d'indium-étain (ITO), SnO₂ dopé de F et SnO₂ dopé de Sb.

7. Elément vitré selon l'une des revendications précédentes, caractérisé en ce que le matériau de la couche (4) plus faiblement électroconductrice de la première plaque vitrée (1) est sélectionné en
a) métaux transitoires porteurs des numéros 22 - 28 dans la classification périodique des éléments et en alliages de ces métaux, en particulier en Cr, Ni, alliages NiCr, acier fin,
b) nitrures ou siliciures électroconducteurs des métaux susmentionnés,
c) métaux précieux Rh, Pd et Pt, ainsi qu'en
d) oxydes métalliques semiconducteurs tels que l'oxyde d'indium-étain (ITO) et le SnO₂ dopé.

8. Elément vitré selon l'une des revendications précédentes, caractérisé en ce qu'au moins l'une des plaques vitrées (1, 2) est reliée à une autre plaque vitrée (6) par une couche intercalaire en plastique (8) pour former ainsi une plaque vitrée feuilletée.

9. Elément vitré selon la revendication 8, caractérisé en ce que la première plaque vitrée (1) est reliée à une autre plaque vitrée (6) par une couche intercalaire en plastique (8) pour former ainsi une plaque vitrée feuilletée.

10. Elément vitré selon l'une des revendications 1 à 8, caractérisé en ce qu'entre la source de rayonnement et la première plaque vitrée (1) se trouve une autre plaque vitrée (6) qui forme avec la première plaque vitrée (1) une plaque vitrée isolante.

11. Elément vitré selon l'une des revendications 9 ou 10, caractérisé en ce que la couche (4) plus faiblement électroconductrice de la première plaque vitrée (1) est disposée sur la surface tournée vers l'autre plaque vitrée (6).

12. Elément vitré selon la revendication 9, caractérisé en que la couche plus faiblement électroconductrice sur la première plaque vitrée (1) est formée par la couche intercalaire en plastique (8) par laquelle la première plaque vitrée (1) est unie à une autre plaque vitrée (6).

13. Elément vitré selon l'une des revendications précédentes, caractérisé en ce qu'entre les deux plaques vitrées (1,2) comportant les couches électroconductrices (3, 4) se trouve au moins une plaque vitrée supplémentaire (5) d'une épaisseur comprise entre 4 et 15 mm.

14. Elément vitré selon la revendication 13, caractérisé en ce que l'une des deux plaques vitrées (1, 2) à couche électroconductrice est unie par une couche intercalaire en plastique (8) à la plaque vitrée supplémentaire (5) pour former une plaque vitrée feuilletée.

15. Elément vitré selon l'une des revendications précédentes, caractérisé en ce qu'au moins l'une des plaques vitrées (1, 2, 5, 6) comporte au moins une couche supplémentaire non électroconductrice (7) provoquant une modification des propriétés optiques (transmission, réflexion, absorption) de l'élément vitré dans la partie visible et/ou dans la partie infrarouge du spectre.

16. Elément vitré selon l'une des revendications précédentes, caractérisé en ce qu'au moins deux des plaques vitrées (1, 2, 5, 6) sont, au niveau de leurs bords, reliées entre elles hermétiquement aux gaz.

17. Elément vitré selon l'une des revendications précédentes, caractérisé en ce que toutes les plaques vitrées (1, 2, 5, 6) sont, au niveau de leurs bords, reliées entre elles hermétiquement aux gaz.

18. Utilisation de l'élément vitré selon l'une des revendications précédentes, en vue de son incorporation dans la zone-fenêtres de murs de bâtiments situés à l'intérieur des limites de portée d'un appareil radar d'aéroport, en poste fixe, ou assimilé.
